Europäisches Patentamt

European Patent Office

Office européen des brevets

(11) Publication number: **0 436 749 A1**

(12) **EUROPEAN PATENT APPLICATION**

(21) Application number: **90100024.0**

(22) Date of filing: **02.01.90**

(51) Int. Cl.⁵: **B60B 27/02**, B62K 25/02, B60B 1/00

(43) Date of publication of application:
**17.07.91 Bulletin 91/29**

(84) Designated Contracting States:
**BE CH DE ES FR IT LI NL SE**

(71) Applicant: **PRO CHINA SPORTING GOODS INDUSTRIES INC.**
**No 8, Hsi An Lane Fung Tien Li**
**Erh Lin Chen Chuang Hua Hsien(TW)**

(72) Inventor: **Hung, Huo-Chen**
**No. 8, Hsi An Lane Fung Tien L**
**Erh Lin Chen Li Chang Hua Hsien(TW)**

(74) Representative: **Casalonga, Axel et al**
**BUREAU D.A. CASALONGA - JOSSE**
**Morassistrasse 8**
**W-8000 München 5(DE)**

(54) **An eccentric wheel for a bicycle.**

(57) An eccentric wheel for a bicycle includes an outer rim (10) and an inner rim (11) connected together by a number of spokes (18). A sleeve (3) with a short tube (31) is provided around a hub (12) of the wheel (1). A guide plate (15) with a threaded hole is fixed relative to the inner rim (11) and another threaded hole is formed on the inner rim (11). A bolt (5) is threadedly engaged with the threaded holes. One end of the bolt (5) is rotatably retained within the short tube (31) so that a rotation of the knob (52) makes a relative movement between the bolt (5) and the guide plate (15) in order that the hub (12) of the wheel (1) is eccentric.

FIG. 2

# AN ECCENTRIC WHEEL FOR A BICYCLE

The present invention relates to a wheel, and more particularly to an eccentric wheel for a bicycle.

Riding a bicycle has become more and more popular for both exercise and entertainment. Unfortunately, bicycles do not provide a ride as exciting as horseback riding until present.

The primary objective of the present invention is to provide an eccentric wheel for a bicycle which is designed to simulate the sensation of horseback riding.

In accordance with one aspect of the present invention, there is provided an eccentric wheel for a bicycle which includes an outer rim and an inner rim connected together by a plurality of spokes. A sleeve with a short tube is provided around a hub of the wheel. A guide plate with a threaded hole is fixed relative to the inner rim and another threaded hole is formed on the inner rim. A bolt threadedly engages with the threaded holes. One end of the bolt is rotatably retained within the short tube so that a rotation of the knob makes a relative movement between the bolt and the guide plate in order that the hub of the wheel is eccentric.

Further objectives and advantages or the present invention will become apparent from a careful reading of the detailed description provided hereinbelow, with appropriate reference to the accompanying drawings.

FIG. 1 is an enlarged elevational view of an inner rim of an eccentric wheel in accordance with the present invention;

FIG. 2 is a partial elevational view of a rear portion of a bicycle utilizing an eccentric wheel in accordance with the present invention;

FIG. 3 is a partial elevational view similar to FIG. 2, illustrating a working position of the eccentric wheel;

FIG. 4 is a rear view of the bicycle;

FIG. 5 is an enlarged perspective view of a guide block; and

FIG. 6 is a partial elevational view similar to that of FIG. 2, illustrating a front portion of a bicycle utilizing an eccentric wheel in accordance with the present invention.

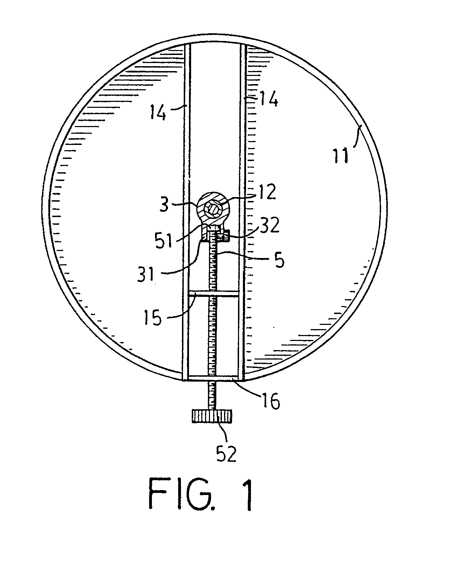

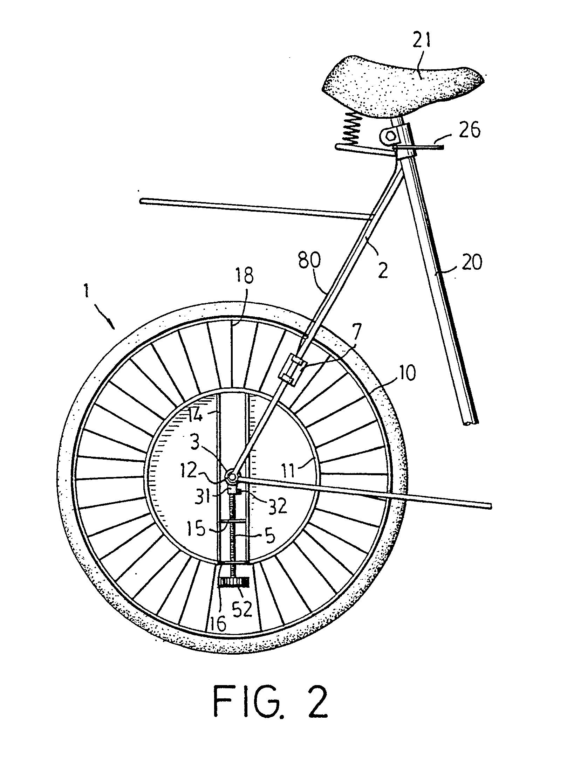

Referring to the drawings and initially to FIGS. 1 and 2, an eccentric wheel, which is generally designated by the numeral 1, for a bicycle in accordance with the present invention comprises generally an outer rim 10 and an inner rim 11 connected together by a plurality of radially oriented spokes 18. As shown in FIG. 2, the eccentric wheel 1 is provided as a rear wheel of the bicycle.

Two frame plates 14 which are substantially parallel are rigidly attached to a center portion of the inner rim 11. Two guide plates 15, 16, each with a threaded hole, are rigidly connected between the two frame plates 14, in which one guide plate 16 is located on a periphery of the inner rim 11 and the other guide plate 15 is located approximately one fourth the length of frame plate 14 away from the guide plate 16.

A sleeve 3 with a short tube 31 is provided around a hub 12 of the wheel 1. The short tube 31 which is substantially a cylinder is rigidly attached to the sleeve 3 and extends radially outward. A bolt 5 has an enlarged diameter head 51 formed at one end thereof. The bolt 5 is threadedly engaged with the threaded holes of the guide plates 15 and 16. The short tube 31 has an open end for receiving the enlarged diameter head 51 of the bolt 5. A screw 32 is threaded through a wall of the short tube 31 and the tip thereof makes light contact with the bolt 5 so that the head 51 of the bolt 5 is rotatable in the short tube 31.

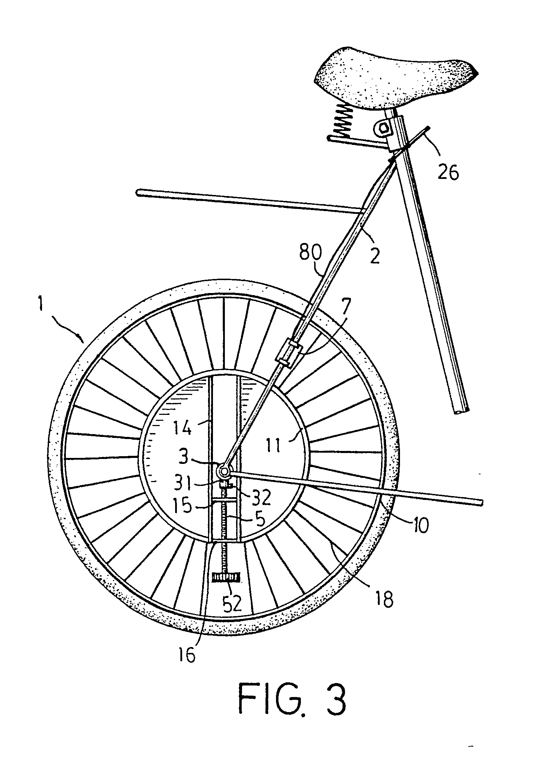

A rotation of the bolt 5 causes a relative movement between the bolt 5 and the guide plates 15, 16 such that the sleeve 3 is slidable between the two frame plates 14 along a longitudinal direction of the frame plates 14 and such that the hub 12 of the wheel 1 is movable away from the center of the wheel 1. As shown in FIG. 2, the hub 12 is located at the center of the wheel 1 and the hub 12 is eccentric as shown in FIG. 3. A knob or a pinion 52 is rigidly provided at the other end of the bolt 5 so that the bolt 5 can be rotated manually.

Alternatively, the guide plate 15 is of sufficient length to be directly fixed on the inner rim 11 instead of on the frame plates 14. The guide plate 15 remains parallel to the guide plate 16. A threaded hole is formed directly in the inner rim 11 instead of being formed in the guide plate 16.

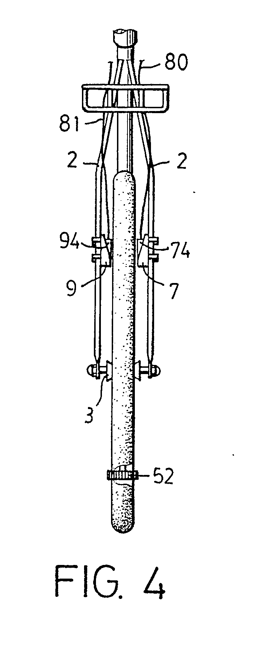

Referring next to FIGS. 3, 4 and 5, a guide block 7 is fixed on a wheel supporting frame or a seat stay 2 of the bicycle. The guide block 7 has an inclined surface 70 with a dovetail slot 72 formed in a center portion thereof. A dovetail 75 is formed on a rear inclined surface of a rack 74 and engages with the dovetail slot 72 of the guide block 7. One end of a cable 80 is rigidly connected to an upper surface of the rack 74 and the other end of the cable 80 is connected to a rear end of a shifter 26 which is pivoted on the seat post 20 below the seat cushion 21 of the bicycle. The shifter 26 functions as a lever, a depression of the front end of the shifter 26 pulls the rack 74 up along the dovetail slot 72. The rack 74 slides downward by gravitational force when the shifter 26 is released. The rack 74 and the guide block 7 are such that the toothed surface 76 of the rack 74 is substantially vertical as is best shown in FIG. 4. Normally, the rack 74 is pulled to an upper position where the pinion 52 is not engagable with the rack 74.

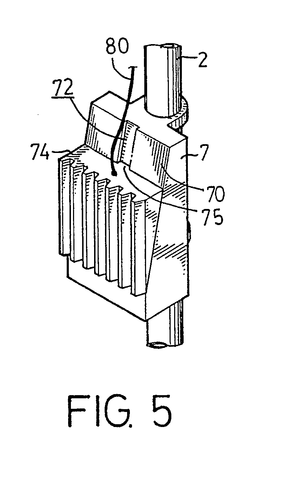

When in use, the rack 74 slides downward to the lowest position as shown in FIGS. 4 and 5 so that the pinion 52 is engagable with the rack 74 when the wheel 1 rotates. The engagement between the pinion 52 and the rack 74 makes a rotation of the bolt 5 causing the guide plates 15 and 16 to move relative to the bolt 5 so that the hub 12 of the bicycle is eccentric. When the rack 74 is pulled upward by the shifter 26, the rack 74 slides along the inclined surface 70 of the guide block 7 and moves relatively away from the wheel 1 so that the pinion 52 is not engagable with the rack 74.

Referring again to FIG. 4, another guide block 9 which is identical to the guide block 7 is positioned opposite and facing the guide block 7 on the opposite seat stay 2. A rack 94 of the guide block 9 is normally pulled upward by the cable 81 by another shifter which is identical to the shifter 26 and which is located opposite to the shifter 26. When the rack 94 moves downward to a lowest position, the rack 94 is engagable with the pinion 52 so that the bolt 5 rotates oppositely and so that the hub 12 can be moved backward to the center of the wheel 1. It is to be noted that the racks 74 and 94 are normally pulled up. When in use, only one rack 74 or 94 is engaged with the pinion 52.

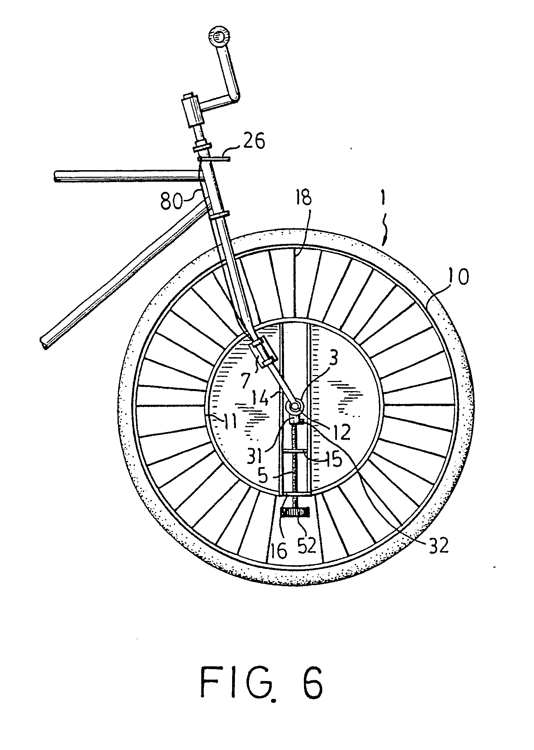

As shown in FIG. 6, the eccentric wheel in accordance with the present invention is also suitable for being provided as a front wheel of the bicycle.

Accordingly, the present invention has the following advantages:

(a) The eccentric wheel simulates an exciting ride like horseback riding.

(b) The eccentric wheel can be operated either manually by the pinion 52 or automatically by the engagement between the pinion 52 and the racks 74, 94.

Although this invention has been described with a certain degree of particularity, it is to be understood that the present disclosure has been made by way of example only and that numerous changes in the detailed construction and the combination and arrangement of parts may be resorted to without departing from the spirit and scope of the invention as hereinafter claimed.

## Claims

1. An eccentric wheel for a bicycle comprising an outer rim (10) and an inner rim (11) connected together by a plurality of spokes (18); a sleeve (3) being provided around a hub (12) of said wheel (1); a short tube (31) being connected to said sleeve (3) and radially extended; a guide plate (15) with a first threaded hole being fixed relative to said inner rim (11); a second threaded hole being formed on said inner rim (11); a bolt (5) being threadedly engaged with said first and said second threaded holes, one end of said bolt (5) being rotatably retained within said short tube (31); and a knob (52) being provided at an other end of said bolt (5) so that a rotation of said knob (52) makes a relative movement between said bolt (5) and said guide plate (15) in order that said hub (12) is eccentric.

2. An eccentric wheel for a bicycle comprising an outer rim (10) and an inner rim (11) connected together by a plurality of spokes (18); a sleeve (3) being provided around a hub (12) of said wheel (1); a short tube (31) being connected to said sleeve (3) and radially extended; a pair of frame plates (14) being fixed in parallel on said inner rim (11); a pair of guide plates (15, 16), each with a threaded hole, being separately fixed on said frame plates (14); a bolt (5) being threadedly engaged with said threaded holes, one end of said bolt (5) being rotatably retained within said short tube (31); and a knob (52) being provided at an other end of said bolt (5) so that a rotation of said knob (52) causes a relative movement between said bolt (5) and said guide plates (15, 16) in order that said hub (12) is eccentric.

3. A bicycle with an eccentric wheel, said eccentric wheel comprising an outer rim (10) and an inner rim (11) connected together by a plurality of spokes (18), a sleeve (3) being provided around a hub (12) of said wheel (1), a short tube (31) being connected to said sleeve (3) and radially extended, a pair of frame plates (14) being fixed in parallel on said inner rim (11), a pair of guide plates (15, 16), each with a threaded hole, being separately fixed on said frame plates (14), a bolt (5) being threadedly engaged with said threaded holes, one end of said bolt (5) being rotatably retained within said short tube (31), and a pinion (52) being provided at an other end of said bolt (5); a pair of guide blocks (7) being fixed on a respective wheel supporting frame (2) of said bicycle; a pair of shifters (26) being located on said wheel supporting frames (2) close to a seat cushion (21) of said bicycle; a rack (74) being slidably provided on each said guide block (7) and facing each other; a cable (8) being connected between each said rack (74) and a respective shifter (26), said racks (74) being actuated to engage with said pinion (52) of said eccentric wheel so that said bolt (5) is actuated to rotate by an engagement between said pinion (52) and said racks (74).

4. A bicycle according to claim 3, wherein a first inclined surface (70) is formed on one side of each said guide block (7); a dovetail slot (72) is formed in a center portion of said first inclined surface (70); each said rack (74) has a second inclined surface formed on a back thereof, a dovetail (75) is formed in a center portion of said second inclined surface and is engagable with said dovetail slot (72) of said guide block (7) so that said rack (74) is slidable along said first inclined surface (70) of said guide block (7); and said rack (74) is actuated to move by said shifter (26) in order to control an engagement between said pinion (52) and said rack (74).

FIG. 1

FIG. 2

FIG. 3

FIG. 4

FIG. 5

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-985369 (ROBBINS)<br>* the whole document *<br>--- | 1, 2 | B60B27/02<br>B62K25/02<br>B60B1/00 |
| A | US-A-4588232 (KIM)<br>* column 2, line 61 - column 3, line 32; figures 2-6 *<br>--- | 1, 3 | |
| A | US-A-3371944 (DANIELS)<br>* column 2, line 59 - column 3, line 12 *<br>* column 4, lines 3 - 39; figures 1, 5 *<br>--- | <br>1 | |
| A | EP-A-0155808 (TSAI)<br>* page 3, line 9 - page 4, line 12; figures 1, 2, 5-10 *<br>----- | 1 | |

TECHNICAL FIELDS SEARCHED (Int. Cl.5 )

B60B
B62K

The present search report has been drawn up for all claims

| Place of search | Date of completion of the search | Examiner |
|---|---|---|
| THE HAGUE | 29 AUGUST 1990 | AYITER I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)